# EUROPÄISCHE PATENTSCHRIFT

(11) **EP 2 693 407 B1**
(45) Veröffentlichungstag und Bekanntmachung des Hinweises auf die Patenterteilung: **05.09.2018**
(21) Anmeldenummer: 13003807.8
(22) Anmeldetag: 31.07.2013
(51) Int. Cl.: G07C 9/00, G06K 7/00

(54) **Verfahren und Vorrichtung zur Optimierung des RFID-Feldes einer Zugangskontrolleinrichtung**
Method and device for optimising the RFID field of an access control device
Procédé et dispositif d'optimisation du champ RFID d'un dispositif de contrôle d'accès

(30) Priorität: 01.08.2012 DE 102012015406
(43) Veröffentlichungstag der Anmeldung: 05.02.2014
(73) Patentinhaber: Gantner Electronic GmbH, 6780 Schruns (AT)
(72) Erfinder: Guger, Andreas, 6700 Bludenz (AT); Barbisch, Stefan, 6793 Gaschurn (AT); Hartmann, Elmar, 6700 Bludenz (AT)
(74) Vertreter: Riebling, Peter

(56) Entgegenhaltungen:
- EP-A1- 1 914 663
- EP-A2- 2 453 392
- WO-A1-2010/132031

## Beschreibung

Die Erfindung betrifft ein Verfahren und eine Vorrichtung zur Optimierung des RFID-Feldes einer Zugangskontrolleinrichtung nach dem Oberbegriff des Patentanspruches 1.

Eine solche Zugangskontrolleinrichtung ist beispielsweise in einem Schloss einer zentralen Schließanlage eingebaut, was jedoch nur als Ausführungsbeispiel der Erfindung zu verstehen ist. Die Erfindung betrifft also sämtliche Zugangskontrolleinrichtungen, die nach dem RFID-Prinzip arbeiten, wobei im Folgenden - der einfacheren Beschreibung wegen - nur ein bevorzugtes Ausführungsbeispiel angegeben wird, welches sich darauf bezieht, dass ein RFID-Feld in einem Schloss einer zentralen Schließanlage optimiert wird.

Die Übertragung der Identinformation erfolgt bei Systemen, die nach ISO 18000-1 ff. genormt sind, folgendermaßen: Das Lesegerät (Reader), das je nach Typ ggf. auch Daten schreiben kann, erzeugt ein hochfrequentes elektromagnetisches Wechselfeld, welches über die im Schloss eingebaute Sende- und Empfangsantenne den vor dem Schloss platzierten RFID-Transponder (RFID-Tag) erfasst. Die von ihm über die Antenne aufgenommene Hochfrequenzenergie dient während des Kommunikationsvorganges gleichzeitig als Stromversorgung für seinen Chip.

Der so aktivierte Mikrochip im RFID-Tag dekodiert die vom Lesegerät gesendeten Befehle. Die Antwort kodiert und moduliert der RFID-Tag in das eingestrahlte elektromagnetische Feld durch Feldschwächung im kontaktfreien Kurzschluss oder durch gegenphasige Reflexion des vom Lesegerät ausgesendeten Feldes. Damit überträgt der Tag seine eigene unveränderliche Seriennummer, weitere Daten des gekennzeichneten Objekts oder andere vom Lesegerät abgefragte Information.
HF-Tags verwenden Lastmodulation, das heißt, sie verbrauchen durch Kurzschließen einen Teil der Energie des magnetischen Wechselfeldes. Dies kann das Lesegerät, theoretisch aber auch ein weiter entfernter Empfänger, detektieren. Die Antennen eines HF-Tags bilden eine Induktionsspule mit mehreren Windungen.

Stand der Technik ist z. B. ein in einem Schrank eingebautes Schloss, welches über die Antenne ein RFID-Feld erzeugt und abstrahlt. Nachdem ein solches Schloss in metallischen Schränken oder in anderen, möglicherweise metallisch leitfähigen Umgebungen eingebaut sein kann, besteht das Problem, dass das RFID-Feld bedingt durch die metallisch leitfähige Einbausituation stark abgeschwächt oder verfälscht wird. Bisher ist es lediglich bekannt, das RFID-Feld dieses Schlosses dadurch zu optimieren, dass eine manuell veränderbare, abstimmbare Kapazität im Schloss eingebaut ist, um die Resonanzfrequenz des RFID-Feldes zu optimieren, um eine optimale Aussendung des RFID-Signals zu ermöglichen.

Nachteil der bekannten Anordnung ist jedoch, dass ein sehr hoher manueller Aufwand beim Abgleich eines solchen RFID-gesteuerten Schlosses gegeben ist. Der Schrank muss geöffnet sein, um bei geöffneter Schranktür Zugang zu dem im Schrank eingebauten Schloss zu erhalten, damit ein manueller Abgleich der Abstimm-Kapazität erfolgen kann.

Wird jedoch die Schranktür nach dem Abgleich wieder geschlossen, besteht die Gefahr, dass der eingestellte Abgleich dadurch verändert wird, was zu unzureichenden Ergebnissen führt.

Weiterer Nachteil eines manuell eingestellten Resonanzzweiges im RFID-Zweig des Schlosses ist im Übrigen, dass bei bestimmter Alterung der Bauelemente eine bestimmte Drift des Sendekanals zu befürchten ist und nach einer bestimmten Zeit eine erneute manuelle Abstimmung notwendig ist.

Die Druckschrift EP 1 914 663 A1 offenbart ein Verfahren zur Optimierung eines RFID-Feldes, wobei ein in einem RFID-Leser vorhandener Sende- und Empfangskreis, der für zwei unterschiedliche Frequenzkanäle ausgelegt ist, von einem Mikroprozessor so angesteuert wird, dass das vom RFID-Leser detektierte magnetische Feld bzw. die abgestrahlte Sendeleistung durch die Veränderung von Kapazitäten optimiert wird.
Dieses Verfahren dient jedoch nicht zum Betreiben einer Zugangskontrollvorrichtung.

Der Erfindung liegt deshalb die Aufgabe zugrunde, ein Verfahren und eine Vorrichtung zur Optimierung des RFID-Feldes in einer Zugangskontrolleinrichtung allgemeiner Art so weiterzubilden, dass eine manuelle Abstimmung des RFID-Feldes entfallen kann.

Zur Lösung der gestellten Aufgabe ist die Erfindung durch die technische Lehre des Anspruches 1 gekennzeichnet.

Wesentliches Merkmal der Erfindung ist, dass eine selbstlernende Abstimmung des schlossseitigen RFID-Feldes stattfindet.

Erfindungsgemäß wird demnach die im Schloss eingebaute Abstimmeinrichtung automatisch in Abhängigkeit von der empfangenen Feldstärke des RFID-Feldes geregelt. Es wird die empfangene Feldstärke erfasst und ein Resonanzkreis in der Abstimmeinrichtung solange abgestimmt, bis die abgestrahlte Sendeleistung ein Optimum erzielt hat.

In einer bevorzugten Ausgestaltung der Erfindung ist die Erfindung dadurch gekennzeichnet, dass die selbstlernende Abstimmeinrichtung im Schloss aus einem RFID-Zweig besteht, der kabelgebunden mit einer Schloss- Steuereinheit in Verbindung steht.

Bevorzugt ist im schlossseitigen RFID-Zweig eine automatisch abgleichbare Kapazität angeordnet, welche die Resonanzfrequenz des Schwingkreises verändert. Die automatisch abgleichbare Kapazität wird von einem im Schlossgehäuse eingebauten Mikrocontroller angesteuert, der das empfangene RFID-Signal des Readers erfasst, auswertet und entsprechend dem empfangenen Signal über den Mikrocontroller die veränderbare Kapazität im RFID-Zweig so ansteuert, dass der Schwingkreis stets in der optimalen Resonanzfrequenz gehalten wird, um die abgestrahlte Feldstärke zu optimieren.

Damit erfolgt eine automatische Abstimmung des RFID-Zweiges und dessen Resonanzfrequenz, die unabhängig davon ist, ob die Schranktür geöffnet oder geschlossen ist, und die von metallischen Umgebungen oder von Veränderungen der Frequenz in Abhängigkeit von der Schlossumgebung unabhängig ist.

Die Erfindung ist nicht darauf beschränkt, dass der Mikrocontroller eine variable Kapazität zur Veränderung der Resonanzfrequenz des RFID-Zweiges ansteuert. Statt einer variablen Kapazität kann auch eine variable Induktivität zur Veränderung des Resonanzkreises des RFID-Kreises verwendet werden.

Die Erfindung setzt im Übrigen voraus, dass das RFID-Feld in einer bestimmten minimalen Stärke von der Empfangsantenne des Schlosses empfangen wird, sodass eine bestimmte Empfangsamplitude am Eingang der Empfangsantenne im Schloss vorliegt, die dann von dem erfindungsgemäßen Messzweig erfasst wird. Diese Amplitude wird als Ausgangsgröße für die Regelung des veränderbaren C-Gliedes verwendet.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.
Es zeigen:
- Figur 1:: schematisiert ein Blockschaltbild einer Anordnung einer zentralen Schließanlage
- Figur 2:: die automatische Abstimmeinrichtung nach der Erfindung

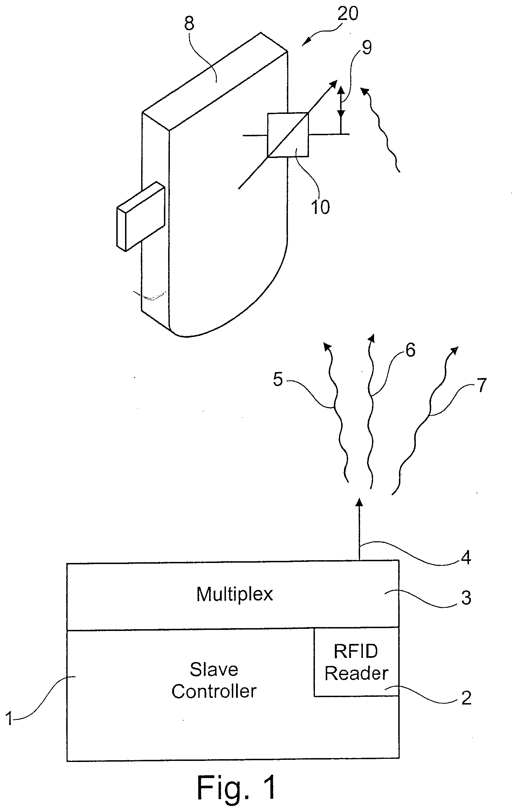

In Figur 1 ist allgemein dargestellt, dass in einer Schloss-Steuereinheit 1 ein RFID-Reader 2 eingebaut ist, der über einen Multiplexer 3 eine Vielzahl von auszusendenden Kanälen 5-7 versorgt.

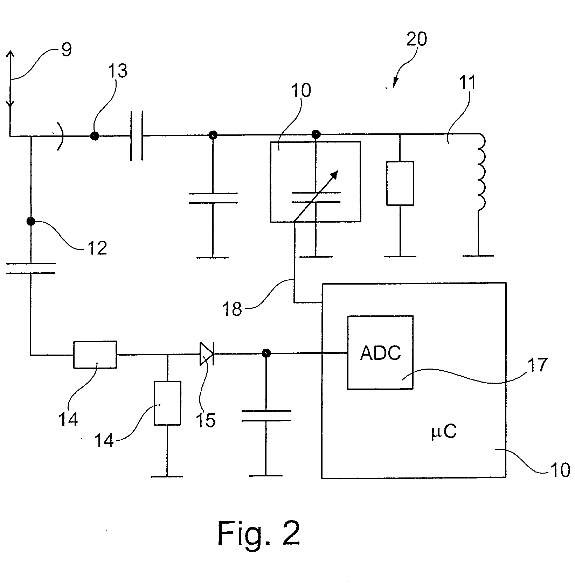

Jedem Kanal 5, 6, 7 ist ein eigenes Schloss 8 zugeordnet, wobei im Ausführungsbeispiel davon ausgegangen wird, dass der Kanal 5 auf das in Figur 1 dargestellte Schloss 8 abgestimmt ist.
Wichtig ist, dass im Schloss eine automatische Abstimmeinrichtung 20 angeordnet ist, die im Wesentlichen aus einer Sende- und Empfangsantenne 9 besteht, die in Figur 2 mit einer Abstimmeinrichtung 20 verbunden ist.

Der obere Zweig der Abstimmeinrichtung 20 besteht aus dem Sende- und Empfangszweig 13, der in seinem wesentlichen Teil ein Abstimmglied 10 enthält, das im bevorzugten Ausführungsbeispiel als variable Kapazität ausgebildet ist. Es wurde bereits schon im allgemeinen Beschreibungsteil darauf hingewiesen, dass statt einer variablen Kapazität auch eine variable Induktivität verwendet werden kann.

Die variable Kapazität ist einem Resonanzkreis 11 zugeordnet, der im bevorzugten Ausführungsbeispiel aus einer Induktivität und einer Kapazität besteht.

Das Antenneneingangssignal der Antenne 9 wird von einem Messzweig 12 abgezweigt und über RC-Glieder und Spannungsteiler 14 von einem Gleichrichter 15 gleichgerichtet und einem Mikrocontroller 16 zugeführt.

Der Mikrocontroller erfasst die Amplitude des von der Antenne 9 empfangenen RFID-Signals und führt dieses dem Mikrocontroller 16 zu, in dem unter anderem ein AD-Wandler 17 eingebaut ist.

Es handelt sich um eine automatische Regelungseinrichtung, die dafür sorgt, dass der AD-Wandler über einen digitalen Abstimmzweig 18 das digitale Abstimmglied 10 ansteuert.

Es handelt sich demnach um eine automatisch arbeitende Regelungseinrichtung, sodass über den Rückkopplungszweig (Messzweig 12) stets dafür gesorgt wird, dass das digitale Abstimmglied 10 auf einen solchen Wert eingeregelt wird, dass der Resonanzkreis 11 auf eine optimalen Resonanzfrequenz eingestellt ist.

Auf diese Weise wird das Sende- und Empfangssignal ständig automatisch optimiert, wobei vorausgesetzt wird, dass die Antenne 9 auf dem Kanal 5 über einen gewissen Zeitraum ein mit gleicher Leistung gleichbleibendes Signal empfängt.

Es ist vorgesehen, dass stets immer nur ein Schloss auf den automatischen Abstimmprozess eingestellt wird.

Eine solche automatische Abstimmung des RFID-Feldes erfolgt bevorzugt in der Einlernphase der Schlösser, die mit ihren digitalen Kennungen einem bestimmten Schrank zugeordnet werden. Durch einen bestimmten Befehl, der vom Host an den Slave-Controller geleitet wird, wird die automatische Abstimmphase eingeleitet und durchgeführt.

**Zeichnungslegende**

| | | | |
|---|---|---|---|
| 1 | Schloss-Steuereinheit | 11 | Resonanzkreis |
| 2 | RFID-Reader | 12 | Messzweig |
| 3 | Multiplexer | 13 | Sende- und Empfangszweig |
| 4 | | 14 | Spannungsteiler |
| 5 | Kanal | 15 | Gleichrichter |
| 6 | Kanal | 16 | Mikrocontroller |
| 7 | Kanal | 17 | AD-Wandler |
| 8 | Schloss | 18 | Abstimmzweig |
| 9 | Schlossverbindungskabel | 19 | |
| 10 | Abstimmglied | 20 | Abstimmeinrichtung |

## Patentansprüche

1. Verfahren zur Optimierung des RFID-Feldes einer Zugangskontrolleinrichtung, bei der ein von einem RFID-Reader (2) ausgehendes, sich über mehrere Kanäle erstreckendes RFID-Feld erzeugt wird, das den in Schränken eingebauten Schlössern (8) einer zentralen Schließanlage über eine Sende- und Empfangsantenne (9) zugeleitet wird, wobei im Schloss (8) eine mit der Sende- und Empfangsantenne (9) verbundene automatisch geregelte Abstimmeinrichtung (20) angeordnet ist, welche einen automatisch abstimmbaren Sende- und Empfangszweig (13) zur Optimierung eines Resonanzschwingkreises (11) beinhaltet, der die abgestrahlte Sendeleistung optimiert, wobei der Sende- und Empfangszweig (13) kabelgebunden mit dem Reader (2) in der Schloss- Steuereinheit in Verbindung steht, wobei die Abstimmeinrichtung (20) von einem im Schlossgehäuse eingebauten Mikrocontroller (16) angesteuert wird, der das empfangene RFID-Signal des Readers (2) erfasst, auswertet und entsprechend der Amplitude des empfangenen Signals über den Mikrocontroller (16) die Abstimmeinrichtung (20), im RFID-Zweig so ansteuert, dass der Resonanzschwingkreis (11) in der optimalen Resonanzfrequenz gehalten wird.

2. Verfahren nach Anspruch 1, **dadurch gekennzeichnet, dass** das vom Reader (2) ausgesendete RFID-Signal im Schloss (8) erfasst und über eine veränderbare Kapazität die Resonanzfrequenz des Resonanzkreises (11) solange abgestimmt wird, bis eine optimale Resonanzfrequenz erreicht ist, um eine optimale Anpassung an die Antenne (9) im Schloss (8) zu erreichen.

3. Verfahren nach Anspruch 1 oder 2, **dadurch gekennzeichnet, dass** die automatische Abstimmung des schlossseitigen Resonanzkreises (11) in der Einlernphase der Schlösser durch einen digitalen Befehl erfolgt, mit dem die automatische Abstimmphase eingeleitet und durchgeführt wird.

4. Vorrichtung zur Optimierung des RFID-Feldes einer Zugangskontrolleinrichtung, bei der ein von einem RFID-Reader (2) ausgehendes, sich über mehrere Kanäle erstreckendes RFID-Feld erzeugt wird, das den in Schränken eingebauten Schlössern (8) einer zentralen Schließanlage über eine Sende- und Empfangsantenne (9) zugeleitet wird, wobei im Schloss (8) eine mit der Sende- und Empfangsantenne (9) verbundene automatisch geregelte Abstimmeinrichtung (20) angeordnet ist, welche einen automatisch abstimmbaren Sende- und Empfangszweig (13) zur Optimierung eines Resonanzschwingkreises (11) beinhaltet, der die abgestrahlte Sendeleistung optimiert, wobei der Sende- und Empfangszweig (13) kabelgebunden mit dem Reader (2) in der Schloss-Steuereinheit in Verbindung steht, wobei die Abstimmeinrichtung (30) von einem im Schlossgehäuse eingebauten Mikrocontroller (16) angesteuert wird, der das empfangene RFID-Signal des Readers (2) erfasst, auswertet und entsprechend der Amplitude des empfangenen Signals über den Mikrocontroller (16) die als variable Kapazität ausgebildete Abstimmeinrichtung (30), im RFID-Zweig so ansteuert, dass der Resonanzschwingkreis (11) in der optimalen Resonanzfrequenz gehalten wird.

5. Vorrichtung nach Anspruch 4 zur Ausführung des Verfahrens nach einem der Ansprüche 1 bis 4, **dadurch gekennzeichnet, dass** in einer Schloss- Steuereinheit (1) ein RFID-Reader (2) eingebaut ist, der über einen Multiplexer (3) eine Vielzahl von auszusendenden Kanälen (5-7) versorgt.

6. Vorrichtung nach einem der Ansprüche 4 bis 5 **dadurch gekennzeichnet, dass** die Abstimmeinrichtung (20) eine geregelte Kapazität oder Induktivität aufweist.

7. Vorrichtung nach einem der Ansprüche 4 bis 6, **dadurch gekennzeichnet, dass** das Antenneneingangssignal der Antenne (9) von einem Gleichrichter (15) gleichgerichtet einem Mikrocontroller (16) mit einem AD-Wandler (17) zugeführt ist, und dass der Mikrocontroller (16) mit dem eingebauten AD-Wandler (17) über einen digitalen Abstimmzweig (18) ein digitales Abstimmglied (10) ansteuert.

8. Vorrichtung nach Anspruch 7, **dadurch gekennzeichnet, dass** das digitale Abstimmglied (10) auf einen solchen Wert eingeregelt ist, dass der Resonanzkreis (11) auf eine optimale Resonanzfrequenz eingestellt ist.

## Claims

1. Method for optimising the RFID field of an access control device, in which an RFID field starting from an RFID reader (2) and extending across several channels is generated which is supplied to the locks (8) of a central closure system installed in cabinets via a transmitting and receiving antenna (9), wherein in the lock (8) is arranged an automatically regulated tuning device (20) connected to the transmitting and receiving antenna (9), which tuning device (20) comprises an automatically tunable transmitting and receiving branch (13) for optimising a resonant oscillating circuit (11) which optimises the irradiated transmitting power, wherein the transmitting and receiving branch (13) is connected fixed by cable to the reader (2) in the lock control unit, wherein the tuning device (20) is triggered by a microcontroller (16) installed in the lock housing and which detects the received RFID signal of the reader (2), evaluates it and according to the amplitude of the received signal, triggers via the microcontroller (16), the tuning device (20) in the RFID branch so that the resonant oscillating circuit (11) is held at the optimum resonant frequency.

2. Method according to claim 1, **characterised in that** the RFID signal emitted by the reader (2) is detected in the lock (8) and via a changeable capacitance, the resonant frequency of the resonant circuit (11) is tuned until an optimum resonant frequency is reached to achieve optimum matching to the antenna (9) in the lock (8).

3. Method according to claim 1 or 2, **characterised in that** the automatic tuning of the lock-side resonant circuit (11) in the memory phase of the locks is effected by a digital command, with which the automatic tuning phase is introduced and carried out.

4. Device for optimising the RFID field of an access control device, in which an RFID field starting from an RFID reader (2) and extending across several channels is generated which is supplied to the locks (8) of a central closure system installed in cabinets via a transmitting and receiving antenna (9), wherein in the lock (8) is arranged an automatically regulated tuning device (20) connected to the transmitting and receiving antenna (9), which tuning device (20) comprises an automatically tunable transmitting and receiving branch (13) for optimising a resonant oscillating circuit (11) which optimises the irradiated transmitting power, wherein the transmitting and receiving branch (13) is connected fixed by cable to the reader (2) in the lock control unit, wherein the tuning device (30) is triggered by a microcontroller (16) installed in the lock housing and which detects the received RFID signal of the reader (2), evaluates it and according to the amplitude of the received signal, triggers via the microcontroller (16), the tuning device (30) formed as a variable capacitance in the RFID branch so that the resonant oscillating circuit (11) is held at the optimum resonant frequency.

5. Device according to claim 4, for executing the method according to one of claims 1 to 4, **characterised in that** an RFID reader (2), which supplies a plurality of channels (5-7) to be emitted via a multiplexer (3), is installed in a lock control unit (1).

6. Device according to one of claims 4 to 5, **characterised in that** the tuning device (20) has a regulated capacitance or inductance.

7. Device according to one of claims 4 to 6, **characterised in that** the antenna input signal of the antenna (9) is supplied, rectified by a rectifier (15), to a microcontroller (16) with an AD converter (17), and **in that** the microcontroller (16) with the installed AD converter (17) triggers a digital tuning link (10) via a digital tuning branch (18).

8. Device according to claim 7, **characterised in that** the digital tuning link (10) is regulated to such a value that the resonant circuit (11) is set to an optimum resonant frequency.

## Revendications

1. Procédé pour optimiser le champ RFID d'un dispositif de contrôle d'accès avec lequel est produit un champ RFID qui part d'un lecteur RFID (2), qui s'étend sur plusieurs canaux et qui est transmis aux serrures (8) d'une installation de verrouillage centrale montées dans des barrières, par l'intermédiaire d'une antenne d'émission et de réception (9), étant précisé qu'il est prévu dans la serrure (8) un dispositif d'accord (20) qui est réglé automatiquement, qui est relié à l'antenne d'émission et de réception (9) et qui contient une branche d'émission et de réception (13) accordable automatiquement pour l'optimisation d'un circuit résonnant (11) qui optimise la puissance d'émission dégagée, la branche d'émission et de réception (13) étant reliée par câble au lecteur (2) dans l'unité de commande de serrure, le dispositif d'accord (20) étant commandé par un microcontrôleur (16), monté dans le boîtier de serrure (2), qui détecte le signal RFID reçu du lecteur, analyse ce signal et, suivant l'amplitude du signal reçu, commande le dispositif d'accord (20) dans la branche FID, par l'intermédiaire du microcontrôleur (16), de manière à maintenir le circuit résonnant (11) dans la fréquence de résonance optimale.

2. Procédé selon la revendication 1, **caractérisé en ce que** le signal RFID émis par le lecteur (2) est détecté dans la serrure (8), et la fréquence de résonance du circuit résonnant (11) est accordée par l'intermédiaire d'une capacité variable jusqu'à ce qu'une fréquence de résonance optimale soit atteinte pour atteindre une adaptation optimale à l'antenne (9) dans la serrure (8).

3. Procédé selon la revendication 1 ou 2, **caractérisé en ce que** l'adaptation automatique du circuit résonnant (11) prévu côté serrure a lieu lors de la phase de programmation ? des serrures grâce à une instruction numérique avec laquelle la phase d'accord automatique est déclenchée et réalisée.

4. Dispositif pour optimiser le champ RFID d'un dispositif de contrôle d'accès avec lequel est produit un champ RFID qui part d'un lecteur RFID (2), qui s'étend sur plusieurs canaux et qui est transmis aux serrures (8) d'une installation de verrouillage centrale montées dans des barrières, par l'intermédiaire d'une antenne d'émission et de réception (9), étant précisé qu'il est prévu dans la serrure (8) un dispositif d'accord (20) qui est réglé automatiquement, qui est relié à l'antenne d'émission et de réception (9) et qui contient une branche d'émission et de réception (13) accordable automatiquement pour l'optimisation d'un circuit résonnant (11) qui optimise la puissance d'émission dégagée, la branche d'émission et de réception (13) étant reliée par câble au lecteur (2) dans l'unité de commande de serrure, le dispositif d'accord (30) étant commandé par un microcontrôleur (16), monté dans le boîtier de serrure (2), qui détecte le signal RFID reçu du lecteur, analyse ce signal et, suivant l'amplitude du signal reçu, commande le dispositif d'accord (30) conçu comme une capacité variable, dans la branche FID, par l'intermédiaire du microcontrôleur (16), de manière à maintenir le circuit résonnant (11) dans la fréquence de résonance optimale.

5. Dispositif selon la revendication 4 pour la mise en oeuvre du procédé selon l'une des revendications 1 à 4, **caractérisé en ce qu'**il est prévu, monté dans une unité de commande de serrure (1), un lecteur RFID (2) qui alimente par l'intermédiaire d'un multiplexeur (3) une multiplicité de canaux (5-7) à émettre.

6. Dispositif selon l'une des revendications 4 à 5, **caractérisé en ce que** le dispositif d'accord (20) comporte une capacité ou inductance réglée.

7. Dispositif selon l'une des revendications 4 à 6, **caractérisé en ce que** le signal d'entrée de l'antenne (9) est transmis, en étant redressé par un redresseur (15), à un microcontrôleur (16) avec un convertisseur analogique-numérique, et **en ce que** le microcontrôleur (16) avec le convertisseur analogique-numérique intégré (17) commande par l'intermédiaire d'une branche d'accord (18) un élément d'accord numérique (10).

8. Dispositif selon la revendication 7, **caractérisé en ce que** l'élément d'accord (10) est réglé à une valeur telle que le circuit résonnant (11) soit ajusté à une fréquence de résonance optimale.
